# EUROPÄISCHE PATENTSCHRIFT

(11) **EP 2 221 191 B1**
(45) Veröffentlichungstag und Bekanntmachung des Hinweises auf die Patenterteilung: **23.10.2013**
(21) Anmeldenummer: 10001864.7
(22) Anmeldetag: 24.02.2010
(51) Int. Cl.: B60B 5/02, B60B 27/02, F16D 41/36, B60B 27/04

(54) **Fahrradnabenbaugruppe mit einer hohlen Achse aus Faserverbundwerkstoff und mit einem Rotor, der eine Stirnverzahnung aufweist**
Bicycle component group with a hollow axle made of fibre compound material and with a rotor with front cogging
Composant de moyeu de vélo doté d'un axe creux en matériau composite renforcé en fibres et doté d'un rotor comportant une dentelure frontale

(30) Priorität: 24.02.2009 DE 102009010258
(43) Veröffentlichungstag der Anmeldung: 25.08.2010
(73) Patentinhaber: CarboFibretec GmbH, 88046 Friedrichshafen (DE)
(72) Erfinder: Wissler, Erhard, 73266 Bissingen/Teck (DE); Leschik, Thomas, 88046 Friedrichshafen (DE); Daum, Daniel, 88045 Friedrichshafen (DE)
(74) Vertreter: Winter, Brandl, Fürniss, Hübner, Röss, Kaiser, Polte - Partnerschaft

(56) Entgegenhaltungen:
- DE-A1- 2 326 787
- DE-U1-202004 008 009
- US-A- 5 647 643
- US-A1- 2006 145 530
- US-A1- 2008 006 500

## Beschreibung

Die Erfindung betrifft eine Fahrradnabenbaugruppe mit einer hohlen Achse aus Faserverbundwerkstoff, an deren zumindest einem Ende ein Ausfallendengegenstück aufgesteckt ist und wobei auf der Achse zumindest ein Wälzlager positioniert ist.

Die Erfindung betrifft auch eine Fahrradnabenbaugruppe, wobei ein vorzugsweise zur Aufnahme zumindest eines Zahnrades ausgebildeter Rotor drehbar auf einer Achse angeordnet ist und eine axial verschiebliche Freilaufeinrichtung enthalten ist, über die in nur eine Rotationsrichtung um die Achse, Kraft vom Rotor auf einen Nabenkörper übertragbar ist.

Benachbarter Stand der Technik ist aus der US 2008/006500 A1, der US 5 647 643 A, der DE 23 26 787 A1 und der US 2006/145530 A1 bekannt.

Aus dem Stand der Technik, etwa der DE 19629740 D4, sind auch Fahrradbauteile bekannt, die aus Faserverbundwerkstoffen gefertigt sind. Faserverbundwerkstoffe bieten den Vorteil, dass sie besonders leicht sind und eine hohe Steifigkeit, insbesondere gegen Biegung, aufweisen. Bauteile aus Faserverbundwerkstoffen, zu denen in Harz getränkte Kohlefaser, Glasfaser oder Aramidfaser zählen, können bedarfsgerecht ausgeformt werden. Unterschiedliche Querschnitte in einem Bauteil, Wanddicken und Oberflächenformen lassen sich durch entsprechend geschicktes Ausrichten der Fasern realisieren.

Ein Fahrrad, insbesondere ein hochwertiges Fahrrad, wie ein im Wettkampfbereich genutztes Rennrad, unterliegt einem besonderen Kostendruck, wobei diese Fahrräder besonders leicht und steif sein sollen. Diese Anforderung an Fahrräder trifft auch auf die Laufräder solcher Fahrräder zu. So werden in den letzten Jahren vermehrt Anstrengungen unternommen, um die Laufräder bzgl. ihres Eigengewichtes zu optimieren. Dies ist sogar bei Bergzeitfahrrennen oder kupiertem Gelände von besonderer Bedeutung, da bei Reduktion des Eigengewichtes der Fahrradlaufräder die Trägheit des Gesamtsystems, insbesondere auch die Trägheit der bewegten Massen reduziert wird.

Allerdings ist darauf zu achten, dass eine Reduktion des Gewichts nicht auf Kosten der Steifigkeit geht, da sonst die vom Fahrradfahrer eingebrachte Energie in Verformungs- und Verwindungsarbeit gewandelt wird und nicht zum Zwecke des Vortriebes nutzbar ist. Es besteht somit schon länger die Anforderung, auch Fahrradlaufräder bei hoher Stabilität und Steifigkeit gewichtsmäßig zu reduzieren.

Die gattungsgemäße DE 202004008009 U1 offenbart hierfür als Lösung die Verwendung einer aus Faserverbundwerkstoff gefertigten Achse einer Fahrradnabenbaugruppe. Dabei werden Fahrradnabenbaugruppen für Hinterräder als auch für Vorderräder offenbart. Um die Abrasionsfestigkeit insbesondere im Bereich von Wälzlagem, die auf der Achse aufgesetzt sind, zu erhalten, geht die DE 202004008009 U1 den Weg, dass auf die Achse aus Aluminium gefertigte rotationssymmetrische separate Endansätze aufgesetzt werden. Die Lager sitzen dann auf diesen Endansätzen, nämlich im Bereich von dort ausgebildeten Lagerflächen.

Aus der EP 1 213 217 B1 und der DE 601 21 281 T2 ist eine mehrteilige Fahrradnabenbaugruppe bekannt. Dabei wird eine mehrteilige Achse verwendet. Zwei Teile der Achse werden über einen Schnellspanner, der abschnittsweise durch beide Achsenteile hindurchragt, verbunden. Die Trennungsebene zwischen den zwei Achsteilen ist gleichzeitig die Trennungsebene zwischen einem Rotor und einem Nabenkörper. Der Rotor greift in ein Zwischenelement ein, das mit einer Freilaufeinrichtung in Kontakt steht.

Benachbarter Stand der Technik ist auch aus der DE 198 28 009 A1 bekannt.

Es ist die Aufgabe der vorliegenden Erfindung, bekannte Fahrradnabenbaugruppen weiter in Bezug auf Steifigkeit, Haltbarkeit und Gewicht zu optimieren.

Die Erfindung schlägt daher als Erstes vor, dass zwischen dem Wälzlager und der Achse eine von dem Ausfallendengegenstück separate Metallisierung aufgebracht ist. Auf diese Weise wird das Gewicht der Fahrradnabenbaugruppe weiter reduziert, ohne jedoch in Kauf nehmen zu müssen, dass selbst bei intensivem Betrieb der Fahrradnabenbaugruppe, etwa in einem im Wettkampf benutzten Rennrad, eine Abrasion auf der Oberfläche der hohlen Achse auftritt. Zusätzlich ist die Montage der Ausfallendengegenstücke, die vorzugsweise beidseitig auf den Enden der Achse aufgesteckt sind, vereinfacht.

Die Erfindung schlägt als Zweites vor, dass der Rotor an seinem dem Nabenkörper zugewandten Ende eine Stirnverzahnung aufweist.

Vorteilhafte Ausführungsformen sind in den Unteransprüchen beansprucht und werden nachfolgend näher erläutert.

So ist es von Vorteil, wenn ein die Stirnverzahnung aufweisendes separates Element des Rotors form- und/oder stoffschlüssig mit diesem verbunden ist. Auf diese Weise lassen sich die dem Verschleiß unterliegenden Elemente aus verschleißfesterem Werkstoff herstellen, als der Rest des Rotors und in einem einfachen Verbindungsschritt miteinander lösbar oder unlösbar verbinden. Das erleichtert eine Vormontage und eine eventuell notwendige Reparatur.

Um das Gewicht der Fahrradnabenbaugruppe zu optimieren ist es von Vorteil, wenn der Zahnkranz und/oder die Stimverzahnung eine Metallbeschichtung auf der Oberfläche aufweist, oder einen Metalleinsatz aufweist. Die Beschichtung ist vorzugsweise nur abschnittweise aufgebracht, insbesondere nur am gesamten Außenumfang und/oder einer der Stirnflächen.

Es ist auch von Vorteil, wenn die Metallisierung eine metallische Beschichtung ist. Eine solche Beschichtung kann im PVD-Verfahren (Physical Vapor Deposition-Verfahren), oder im CVD-Verfahren (Chemical Vapor Deposition-Verfahren) aufgebracht werden. Durch die Nutzung bekannter Verfahren, ist die Prozesssicherheit erhöht und wird nur ein hauchdünner Metallauftrag auf die Oberfläche der Achse vorgenommen. Dieser Auftrag von Metall kann so gering bzw. dünn sein, dass er lediglich einem Innenring eines Wälzlagers ausreichend Abriebfestigkeit entgegensetzt. Diese Metallisierung ist vorzugsweise nur im Bereich der Wälzlager vorgehalten, wodurch das Eigengewicht der Achse mit den dann weniger massiv ausstaltbaren Ausfallendengegenstücken optimiert ist.

Dabei ist es von Vorteil, wenn die Metallisierung zumindest abschnittsweise plan zur Oberfläche der Achse, in diese ausgeführt ist. Auf diese Weise lässt sich ein Lager einfach auf die Metallisierung aufschieben und positionieren, ohne dass hierfür aufwändige Werkzeuge zur Hand genommen werden müssten.

Die Positionierung der Wälzlager, unter Vermeidung von Beschädigungen der Achse, wird auch dann verbessert, wenn die Metallisierung zumindest an einer Schulter der Achse anliegt, wobei die Schulter durch eine plötzliche Außendurchmesservariation der Achse erzeugt ist.

Wenn die Metallisierung eine dem kleineren Außendurchmesserbereich zugewandte Seite der Schulter abdeckt, so wird ein Eindringen des Innenringes des Wälzlagers in den Faserverbundwerkstoff bei axial eingeleiteten Kräften vermieden. Dies erhöht die Lebensdauer und vermindert den Ausfall einer erfindungsgemäßen Fahrradnabenbaugruppe.

Es ist ferner von Vorteil, wenn die Achse eine konstante Wandstärke aufweist. Auf diese Weise lassen sich hohe Biegesteifigkeitswerte erreichen, wobei durch entsprechende Wahl des Außendurchmessers die absolute Belastung besonders hoch sein kann. Je größer der Außendurchmesser der Hohlachse gewählt wird, desto höhere Biegesteifigkeitswerte lassen sich erreichen.

Es hat sich in einer Variante als vorteilhaft herausgestellt, wenn entlang einer Rotationsachse diese Achse eine konstante Querschnittsfläche orthogonal zur Rotationsachse aufweist. Es ist dabei allerdings genau der Bereich ausgenommen, an dem die Achse einen Außendurchmessersprung aufweist. Genau in diesem durch die Wandstärke der Achse bestimmten Sprungbereich liegt logischerweise eine größere Querschnittsfläche vor.

Um die Fahrradnabenbaugruppe besonders einfach in einem Hinterbau, und dort in den Ausfallenden, positionieren zu können, ist es von Vorteil, wenn das Ausfallendengegenstück einen Innenring eines Wälzlagers auf die an der Seite der Schulter anliegende Metallisierung drängt, wobei der Innenring auf einem zylindrischen Abschnitt der Metallisierung aufsitzt. Dadurch wird, beim Einbau eines die Fahrradnabenbaugruppe enthaltenden Fahrradlaufrades in den Rahmen oder die Gabel eines Fahrrades zusätzlich die Positionierung des Wälzlagers gesichert.

Um Relativbewegungen der Einzelelemente zueinander zu gewährleisten, ist es von Vorteil, wenn ein Rotor konzentrisch zur Achse, diese umgebend, auf zwei Wälzlagern, gelagert ist. Durch die Verwendung eines Rotors können auch Ritzelpakete oder einzelne Ritzel in Form von Zahnrädern auf den Rotor aufgebracht werden, so dass über einen Kettenantrieb die Fahrradnabenbaugruppe in Drehung versetzbar ist.

Als besonders vorteilhaft hat es sich in Versuchen herausgestellt, wenn ein mehrteiliger Nabenkörper auf zwei die Achse umgebenden Wälzlagern, die Achse umgebend, relativ zu ihr drehbar gelagert ist, wobei ein Innennabenkörper des Nabenkörpers aus Verbundwerkstoff und ein Außennabenkörper des Nabenkörpers aus metallischem Werkstoff gefertigt ist. Das Gewicht lässt sich dadurch weiter reduzieren und die aufzufangenden Kräfte durch bedarfsgerecht ausgelegte Komponenten ableiten.

Besonders stabil ist ein Ausführungsbeispiel dann, wenn sich der Innennabenkörper im Wesentlichen entlang der gesamten Innenseite des Außennabenkörpers erstreckt.

Besonders leicht lässt sich eine Fahrradnabenbaugruppe ausgestalten, wenn der Innennabenkörper durch eine zwischen den den Nabenkörper stützenden Wälzlagern angeordnete Unterbrechung zweigeteilt ist.

Die Erfindung betrifft auch ein Fahrrad mit einem Hinter- und/oder einem Vorderrad, in das/die eine Fahrradnabenbaugruppe gemäß der Erfindung eingebaut ist. Auf diese Weise lässt sich ein besonders kompetitives Fahrrad herstellen und vertreiben.

Die Erfindung wird nachfolgend mit Hilfe einer Zeichnung näher erläutert.

Es zeigen:
- Fig. 1: eine erste Ausführungsform einer erfindungsgemäßen Fahrradnabenbaugruppe mit einem dreiteiligen Nabenkörper,
- Fig. 2: eine zweite Ausführungsform einer erfindungsgemäßen Fahrradnabenbaugruppe mit einem zweiteiligen Nabenkörper,
- Fig. 3: eine dritte Ausführungsform einer erfindungsgemäßen Fahrradnabenbaugruppe mit einem dreiteiligen Nabenkörper, wobei jedoch eine Scheibe an einem Ende der Achse zur Lagesicherung eines achsaußenseitig angeordneten Wälzlagers angebracht ist,
- Fig. 4: eine vierte Ausführungsform der erfindungsgemäßen Fahrradnabenbaugruppe, die einen zweiteiligen Nabenkörper aufweist, wobei wie in dem in Fig. 3 dargestellten Ausführungsbeispiel, ein achsendseitiges Lager durch eine in einen Innennabenkörper einschraubbare Scheibe lagegesichert ist,
- Fig. 5: eine perspektivische Teilansicht eines stirnverzahnten Rotors,
- Fig. 6: eine mit der Stimverzahnung des Rotors aus Fig. 5 in Formschluss gelangbare Zahnscheibe,
- Fig. 7: einen Zahnring in perspektivischer Darstellung, der mit der Zahnscheibe in Formschluss bringbar ist und
- Fig. 8: eine perspektivische Darstellung einer alternativen Zahnscheibe, die Durchgangslöcher aufweist.

Die Figuren sind lediglich schematischer Natur und dienen nur dem Verständnis der Erfindung. Für die gleichen Elemente werden dieselben Bezugszeichen verwendet.

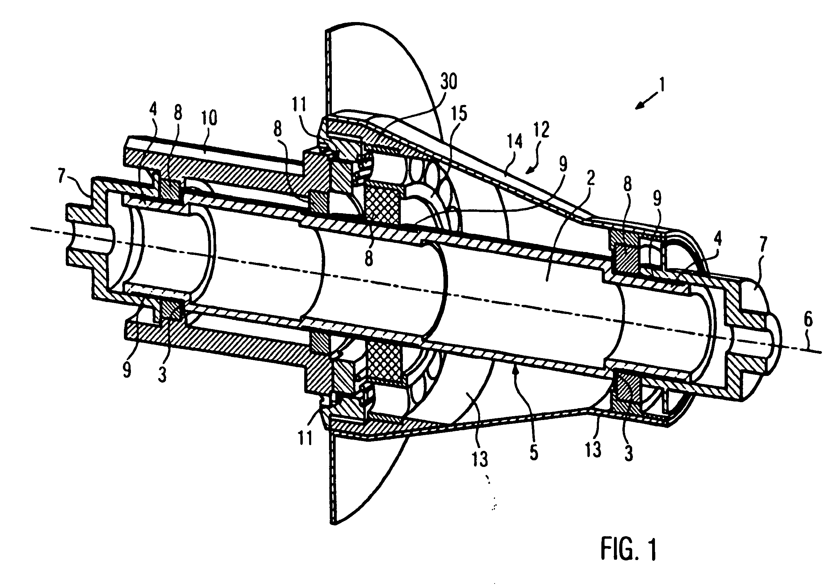

Fig. 1 ist eine schematische Schnittansicht eines ersten Ausführungsbeispieles einer erfindungsgemäßen Fahrradnabenbaugruppe 1. Dieses erste Ausführungsbeispiel weist eine hohle Achse 2 auf. Die Achse 2 weist mehrere zylindrische Abschnitte auf, wobei jeder Abschnitt einen anderen Außendurchmesser aufweist. In den Übergangsbereichen von einem Außendurchmesser zum nächsten Außendurchmesser ist jeweils eine Schulter 3 ausgebildet.

Die Achse weist zwei Enden 4 auf. Die Enden 4 weisen einen kleineren Außendurchmesser auf, als er in einem mittigen Bereich 5 der Achse 2 vorhanden ist.

Die Wandstärke der Achse 2 ist an allen Stellen gleich groß und bleibt entlang einer Rotationsachse 6 konstant.

Auf die Enden 4 sind Ausfallendengegenstücke 7 aufgeschoben.

Während die Achse 2 aus Faserverbundwerkstoff gefertigt ist, sind die Ausfallendengegenstücke 7 aus einem metallischen Werkstoff, bspw. aus Leichtmetall oder einer Leichtmetalllegierung gefertigt. Als probates Material haben sich Titan- , Aluminium-, Magnesium- oder sog. Titanallegierungen bewährt. Die Achse 2 aus Faserverbundwerkstoffen ist im Wesentlichen aus Glas-, Aramid- und/oder Kohlefaser in einem Harzbett ausgebildet.

Zwischen den Schultern 3 und den Ausfallendengegenstücken 7, im Bereich der Enden 4, sind Wälzlager 8 angeordnet. Auch in dem mittigen Bereich 5 sind zwei Wälzlager 8 angeordnet.

Die Wälzlager 8 sind als Kugel-, Rollen-, Tonnen- oder Zylinderwälzlager ausgebildet. Die Wälzlager 8 weisen jeweils einen Innen- und einen Außenring auf. Der Innenring ist durch eine Metallisierung 9 am direkten Kontakt mit der Oberfläche der Achse 2 gehindert.

Die Metallisierung 9 ist auch zwischen der Oberfläche der Achse 2 und dem Ausfallendengegenstück 7 angeordnet.

In dem mittigen Bereich 5, in dem die inneren zwei Wälzlager 8 angeordnet sind, erstreckt sich eine durchgehende Metallisierung 9 von einem Innenring des einen Wälzlagers zum anderen Innenring des anderen Wälzlagers. In diesem Bereich ist auch eine sich nach innen erstreckende Nut der Achse 2 ausgebildet. Die Oberfläche der Achse 2 ist im mittigen Bereich 5 plan, so dass entlang der gesamten Achse 2 nur zwei unterschiedliche Außendurchmesserwerte an der Oberfläche anliegen.

Die Ausfallendengegenstücke 7 weisen eine im Wesentlichen rotationssymmetrische Form auf, die achsfern in Zylinderabschnitte übergehen, die an Schlitze in den Ausfallenden eines Hinterbaus eines Fahrrades oder Gabelenden einer Gabel eines Fahrrades angepasst sind, um die Fahrradnabenbaugruppe an der Gabel oder dem Hinterbau zu fixieren. Zu diesem Zweck ist ein nicht dargestellter Schnellspanner durch die hohle Achse 2 und die hohl ausgestalteten Ausfallendengegenstücke 7 durchführbar.

Die in Fig. 1 dargestellten linken zwei Wälzlager 8 lagern einen Rotor 10. Der Rotor 10 ist daher relativ zur Achse 2 um die Rotationsachse 6 herum drehbar. Eine Freilaufeinrichtung 11 hindert ihn, relativ zu einem Nabenkörper 12, an Rotation in die eine Richtung und ermöglicht eine Rotation in die andere Richtung. D.h., bei Rotationen des Rotors 10 in eine Richtung wird der Nabenkörper 12 nicht in Bewegung versetzt, wohingegen eine Rotation des Rotors 10 in die andere Richtung den Nabenkörper 12 mitnehmend in Bewegung versetzt. Der Nabenkörper 12 ist in dem in Fig. 1 dargestellten Ausführungsbeispiel grundsätzlich dreiteilig aufgebaut und weist einen zweigeteilten Innennabenkörper 13 und einen einteiligen Außennabenkörper 14 auf.

An dem in Fig. 1 dargestellten linken, den Nabenkörper 12 tragenden Wälzkörper 8, ist mit diesem Wälzlager 8 ein in kraftübertragender Verbindung befindliches Zwischenstück 15 ausgebildet. Das Zwischenstück 15, wie auch der Innennabenkörper 13 ist aus Leichtmetall, insbesondere einer Aluminium-, Titan- oder Magnesiumlegierung gefertigt. Der Außennabenkörper 14 hingegen ist aus Faserverbundwerkstoff, wie Kohlefaser enthaltenem Harz, gefertigt. Statt Kohlefaser lassen sich auch Glasfaser oder Aramidfaser verwenden.

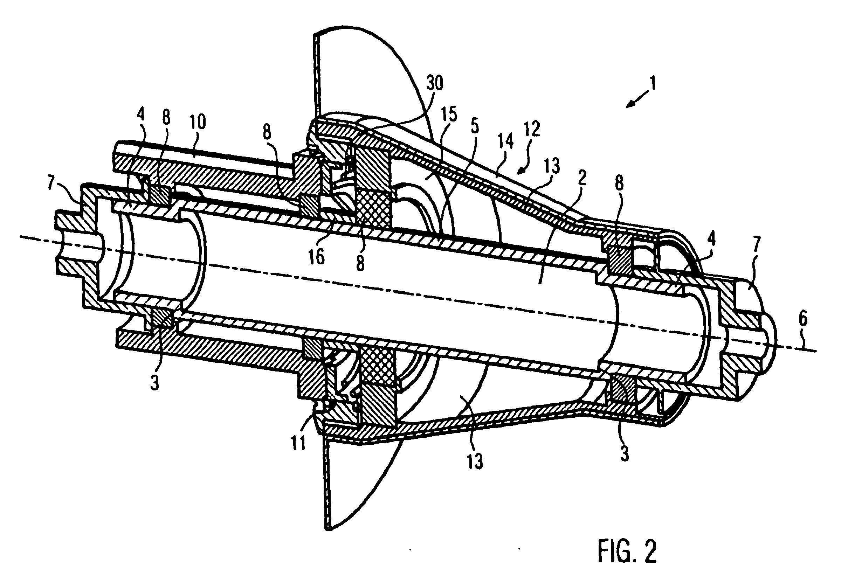

Das in Fig. 2 dargestellte Ausführungsbeispiel ist insbesondere in Bezug auf den Nabenkörper 12 und ein zwischen den inneren beiden Wälzlagern 8 angeordneten Distanzring 16 unterschiedlich zu dem ersten Ausführungsbeispiel. In dem dargestellten Ausführungsbeispiel nach Fig. 2 ist die Metallisierung 9 aufgrund ihrer geringen Dünne nicht dargestellt.

Es dehnt sich der Innennabenkörper 13 von einem ersten Wälzlager 8 durchgehend zu einem zweiten Wälzlager 8 aus.

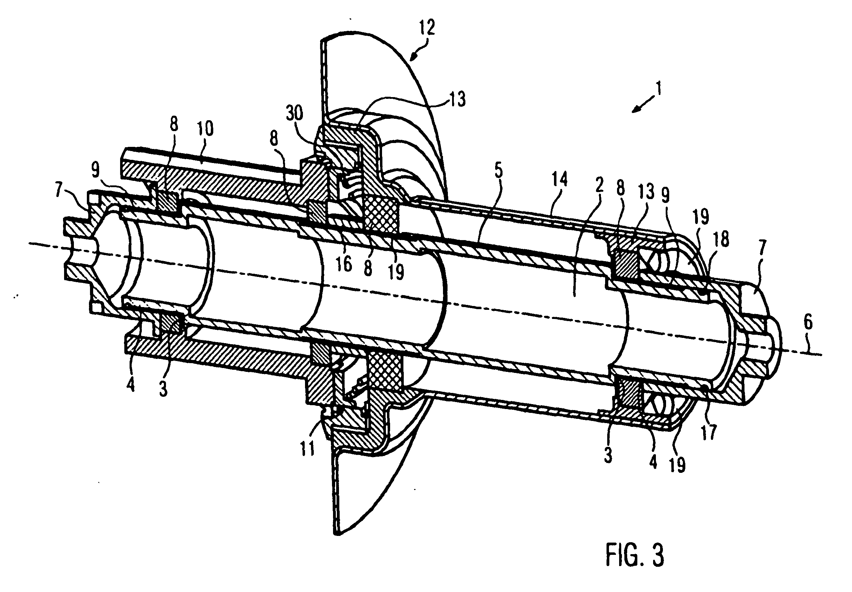

Im Unterschied zu dem Ausführungsbeispiel gemäß der Fig. 1, weist das dritte Ausführungsbeispiel, wie es in Fig. 3 dargestellt ist, einen zusätzlichen Distanzring 16 zwischen den inneren beiden Wälzlagern 8 auf. Während sich in der Variante gemäß der Fig. 1 und 2 der Nabenkörper 12 zwischen den nabenkörperseitigen Wälzlagern 8 im Wesentlichen konisch erstreckt, erstreckt sich der Nabenkörper 12 im Ausführungsbeispiel 3 und 4 im Wesentlichen zylindrisch.

Der Nabenkörper 12 weist dabei mehrere Zylindereabschnitte unterschiedlichen Durchmessers auf, wobei jeweils in einem relativ kleinen Bereich konische Übergänge vorhanden sind. Zwischen den beiden nabenkörperseitigen Wälzlagern 8 ist der Nabenkörper 12 jedoch im Wesentlichen zylindrisch ausgebildet.

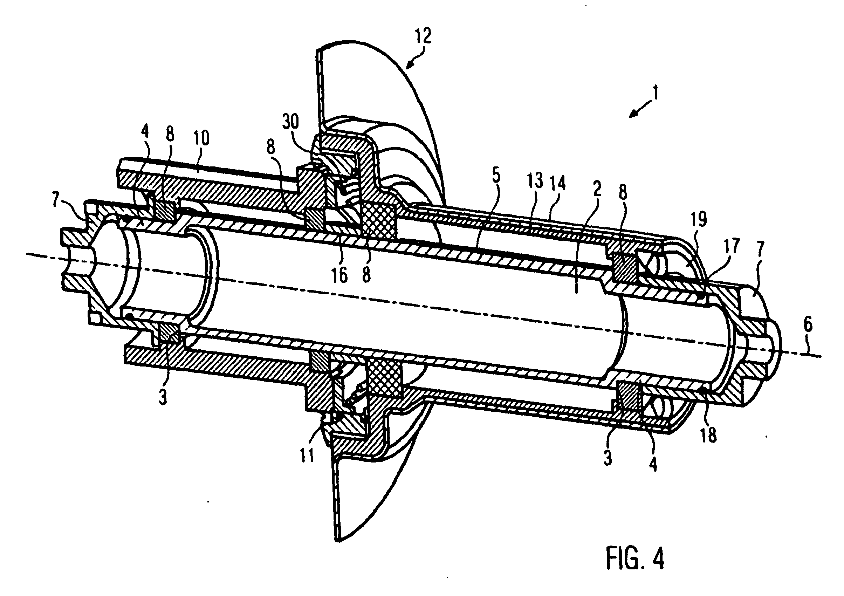

Auch in dem in Fig. 4 dargestellten Ausführungsbeispiel ist ein Distanzring 16 zwischen den inneren beiden Wälzlagern 8 angeordnet und ist der Nabenkörper 12 im Wesentlichen zylindrisch, zumindest in dem Bereich zwischen den nabenkörperseitigen Wälzlagern 8 ausgebildet.

Das nabenkörperseitige Ende der Achse 2 weist an dem dort kleineren Außendurchmesser, verglichen mit dem mittigen Bereich 5 der Achse 2, eine umlaufende Nut 17 auf. In dieser Nut 17 ist ein Rückhaltemittel, wie ein O-Ring 18 eingesetzt. Der O-Ring 18 weist dabei einen Innendurchmesser auf, der unwesentlich kleiner als der Innendurchmesser der Nut 17 ist. Dadurch sitzt der aus elastischem Material gefertigte O-Ring 18 straff auf dem nabenkörperseitigen Ende 4 der Achse 2 auf.

Dieser O-Ring 18 dient als Lagesicherung zu dem auf diesen aufgeschobenen Ausfallendengegenstück 7. Das Ausfallendengegenstück 7 kann im Bereich des O-Rings 18 eine weitere nicht dargestellte Nut aufweisen, um ein Verrasten des Endes 4 der Achse 2 mit dem Ausfallendengegenstück 7 durch den O-Ring 18 zu erreichen. Der Außendurchmesser des O-Rings 18 ist unwesentlich kleiner als der Durchmesser der in das Ausfallendengegenstück 7 eingebrachten Nut.

Eine weitere Lagesicherung ist für die Achse 2 und insbesondere für das Wälzlager 8 achsendseitig im Bereich des Nabenkörpers 12 angeordnet. Dieselbe Scheibe 19, wie sie auch in dem Ausführungsbeispiel gemäß Fig. 3 verwendet wurde, wird auch im Ausführungsbeispiel gemäß 4 verwendet und weist zumindest zwei Öffnungen in ihrer Oberfläche auf, damit ein Werkzeug eingreifen kann und die Scheibe 19 in ein Innengewinde des Innennabenkörpers 13 einschraubbar ist.

Die Scheibe 19 ist bis zur Anlage an das nabenkörperaußenseitige Wälzlager 8 einschraubbar und stellt eine Lagesicherung dar.

Zwischen dem inneren Scheibenrand der Scheibe 19 und der zylindrischen Außenoberfläche des Ausfallendengegenstücks 7 ist ein kleiner Spalt vorgesehen, um Relativbewegungen zwischen der Scheibe und dem Ausfallendengegenstück 7 zu ermöglich. Statt der Scheibe 19 lassen sich auch herkömmliche Sprengringe verwenden.

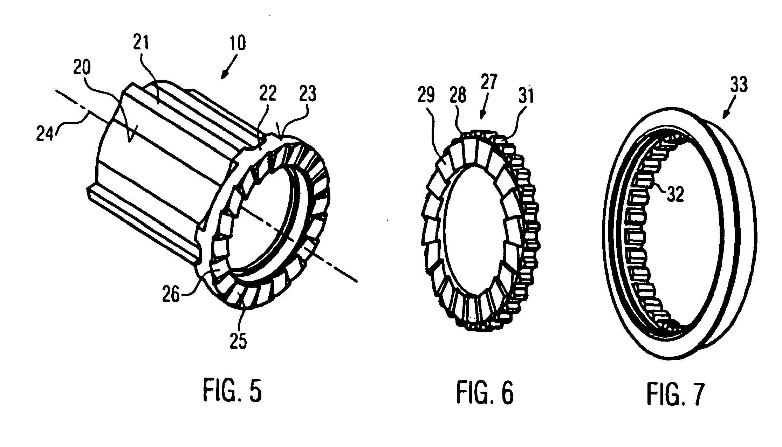

In Fig. 5 ist ein in perspektiver Ansicht dargestellter separater Rotor 10 visualisiert. Der Rotor 10 weist auf seiner grundsätzlich zylindrischen Oberfläche 20 ein Keilprofil 21 auf. Auf dieses Keilprofil 21 ist zumindest ein Zahnkranz aufsteckbar und fixierbar.

Der Zahnkranz ist nicht dargestellt, kann jedoch auch Teil eines Ritzelpaketes sein. Über einen solchen Zahnkranz ist mittels einer Kette Kraft auf den Rotor 10 übertragbar.

Der Rotor 10 weist einen radial abstehenden Flansch 22 auf. Der Flansch 22 ist mit einer zylindrischen Außenoberfläche 23 versehen. Der Rotor 10 weist eine Längsachse 24 auf. Die Längsachse 24 ist auch die Symmetrie- und Rotationsachse des Rotors 10. Ist der Rotor 10 in die Fahrradnabenbaugruppe 1 eingebaut, so ist diese Längsachse 4 identisch zu der Rotationsachse 6.

Der Flansch 22 weist auf der dem Nabenkörper 12 im eingebauten Zustand zugewandten Seite ein mehrzahnartiges Profil 25 auf. Das Profil 25 ist eine Stirnverzahnung. Die Stirnverzahnung ist in den Flansch 22 des Rotors 10 eingebracht. Die Stirnverzahnung weist Gleitflächen 26 auf, die schräg zu einer Teilungsebene stehen, welche orthogonal zur Längsachse 24 ausgerichtet ist. Die Gleitflächen 26 sind in zwei Richtungen, relativ zur Längsachse 24, verkippt.

Die Stirnverzahnung des Profils 25 gelangt im verbauten Zustand des Rotors 10 in der Fahrradnabenbaugruppe 1 mit einer Zahnscheibe 27 in Eingriff. Dabei weist die Zahnscheibe 27 auf der dem Rotor 10 zugewandten Seite eine angepasste Stirnverzahnung 28 auf. Die Stirnverzahnung 28 ist jedoch nicht identisch zu der Stirnverzahnung des Profils 25. Die Stirnverzahnung 28 weist ebenfalls Gleitflächen auf, die als Gegengleitflächen 29 im eingebauten Zustand an den Gleitflächen 26 entlanggleiten. Dazu ist im eingebauten Zustand die Zahnscheibe 27 in Richtung der Rotationsachse 6 mittels einer Feder 30 verschiebbar. Während des Verschiebens ist die Zahnscheibe 27 über eine radial abstehende Profilierung 31 geführt. Die Profilierung 31 weist ein Zahnwellenprofil auf und ist am Umfang der Zahnscheibe 27 ausgebildet.

In das Zahnwellenprofil der Profilierung 31 greift formschlüssig eine zahnwellenartige Verzahnung 32 eines Zahnringes 33 ein, wie er in Fig. 7 dargestellt ist. In einem besonderen Ausführungsbeispiel wird die Zahnscheibe 27 mittels einer als Schraubenfeder ausgebildeten Feder 30 innerhalb des Zahnringes 33 hin und her geschoben, wodurch die Stirnverzahnung 28 der Zahnscheibe 27, je nach Position, mit dem Profil 25 in Formschluss befindlich ist oder dieser Formschluss aufgelöst ist. Der Formschluss ist jedoch nur aufgelöst, wenn kurzzeitig der Rotor 10 mit seinen Gleitflächen 26 über die Gegengleitflächen 29 gleitet. Bei Rotation des Rotors 10 in die eine Richtung wird die Zahnscheibe 27 somit mitrotiert und bei Rotation des Motors 10 in die andere Richtung wird die Zahnscheibe 27 nicht mitgenommen. Während dieses Durchrutschens wird die Zahnscheibe 27 von dem Rotor 10 weggedrückt und bewegt sich entlang der Längsachse 24 innerhalb des Zahnringes 33. Sobald die Zahnscheibe 27 wieder in Eingriff in puncto des Ineinanderfassens der an dem Rotor 10 und der Zahnscheibe 27 ausgebildeten Vorsprünge gelangbar ist, drückt die Feder 30 die Zahnscheibe wieder auf den Rotor 10 in Eingriff.

Als Werkstoff für den Rotor 10 haben sich Aluminiumlegierungen, Magnesiumlegierungen, Keramik und Kunststoff bewährt. Insbesondere hat sich als Beispiele für Kunststoff Faserverbundwerkstoffe, wie in Harz eingebettete Kohlefaser, Aramidfaser und Glasfasern bewährt. Auch Kombinationen dieser einzelnen Werkstoffe sind möglich. Es ist auch möglich Einsätze aus Metall, insbesondere aus Stahl im Bereich des Profils 25, der Stirnverzahnung 28 und der Profilierung 31 sowie der Verzahnung 32 zu verwenden.

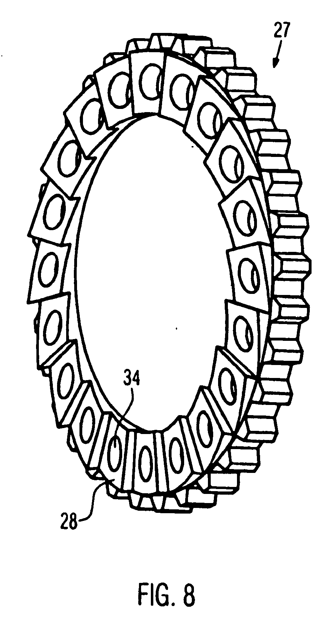

Aus Gewichtreduzierungsgründen hat es sich, wie in Fig. 8 dargestellt, auch bewährt, wenn in die Gleitflächen 28 Öffnungen eingebracht sind. Diese Öffnungen sind mit dem Bezugszeichen 34 versehen. Die Öffnungen 34 sind als Durchgangslöcher per Bohrung in den Zahnring 33 eingebracht. Für eine solche Ausgestaltung hat sich bewährt, wenn der Zahnring 33 aus Stahl gefertigt ist, da er besonders verschleißfest ist. Als Gegenpart wird dann der Rotor 10 aus einem gewichtsmäßig leichteren aber weicheren Werkstoff, wie etwa Leichtmetall oder Faserverbundwerkstoff gefertigt. Im Verschleißfall muss somit lediglich der als Komplettrotor ausgebildete Rotor 10 gewechselt werden.

Es ist auch möglich, den Rotor nicht nur mit einer Stirnverzahnung zu versehen, sondern auch das Zahnrad integral mit dem Rotor 10 auszubilden. Dazu ist es von Vorteil, wenn die Zahnräder eine metallische Beschichtung aufweisen, insbesondere, wenn der Gesamtrotor mit dem Zahnkranz aus Leichtmetall oder Kohlefaserverbundwerkstoff gefertigt ist.

## Patentansprüche

1. Fahrradnabenbaugruppe (1) mit einer hohlen Achse (2) aus Faserverbundwerkstoff, an deren zumindest einem Ende (4) ein Ausfallendengegenstück (7) aufgesteckt ist und wobei auf der Achse (2) zumindest ein Wälzlager (8) positioniert ist, **dadurch gekennzeichnet, dass** zwischen dem Wälzlager (8) und der Achse (2) eine von dem Ausfallendengegenstück (7) separate Metallisierung (9) aufgebracht ist.

2. Fahrradnabenbaugruppe (1) nach Anspruch 1, **dadurch gekennzeichnet, dass** ein Rotor (10) drehbar auf der Achse (2) angeordnet ist und eine axial verschiebbare Freilaufeinrichtung (11) enthalten ist, über die in nur eine Rotationsrichtung um die Achse (2) Kraft vom Rotor (10) auf einen Nabenkörper (12) übertragbar ist, wobei der Rotor (10) an seinem dem Nabenkörper (12) zugewandten Ende eine Stirnverzahnung aufweist.

3. Fahrradnabenbaugruppe (1) nach Anspruch 2, **dadurch gekennzeichnet, dass** ein die Stirnverzahnung aufweisendes separates Element des Rotors (10) form- und/oder stoffschlüssig mit diesem verbunden ist.

4. Fahrradnabenbaugruppe (1) nach Anspruch 2 oder 3, **dadurch gekennzeichnet, dass** ein auf den Rotor (10) aufschiebbarer Zahnkranz und/oder die Stimverzahnung zumindest abschnittsweise eine Metallbeschichtung auf der Oberfläche aufweist oder einen Metalleinsatz aufweist.

5. Fahrradnabenbaugruppe (1) nach einem der Ansprüche 1 bis 4, **dadurch gekennzeichnet, dass** die Metallisierung (9) eine metallische Beschichtung ist.

6. Fahrradnabenbaugruppe (1) nach einem der vorhergehenden Ansprüche, dadurch gekenntzeichnet, dass die Metallisierung an einer Schulter (3) der Achse (2) anliegt, wobei die Schulter (3) durch eine plötzliche Außendurchmesservariation der Achse (2) erzeugt ist.

7. Fahrradnabenbaugruppe (1) nach Anspruch 6, **dadurch gekennzeichnet, dass** die Metallisierung eine dem kleineren Außendurchmesserbereich zugewandte Seite der Schulter (3) abdeckt.

8. Fahrradnabenbaugruppe (1) nach einem der Ansprüche 1 bis 7, **dadurch gekennzeichnet, dass** die Achse (2) eine konstante Wandstärke aufweist, oder entlang einer Rotationsachse (6) eine konstante Querschnittsfläche orthogonal zu dieser aufweist.

9. Fahrrad mit einem Hinter- und/oder Vorderrad, in das eine Fahrradnabenbaugruppe nach einem der vorhergehenden Ansprüche eingebaut ist.

## Claims

1. A bicycle hub component (1) comprising a hollow axle (2), which is made of fiber composite material and which has a dropout counter piece (7) attached to at least one end (4) thereof, said axle (2) having positioned thereon at least one ball bearing (8), **characterized in that** a metallization (9), which is separate from the dropout counter piece (7), is applied between the ball bearing (8) and the axle (2).

2. A bicycle hub component (1) according to claim 1, **characterized in that** a rotor (10) is rotatably supported on the axle (2) and that an axially displaceable freewheeling device (11) is comprised, via which force can be transmitted from the rotor (10) to a hub shell (12) in only one direction of rotation about the axle (2), the rotor (10) being provided with a spur gearing on its end facing the hub shell (12).

3. A bicycle hub component (1) according to claim 2, **characterized in that** a separate element of the rotor (10) having the spur gearing formed thereon is connected to the rotor (10) through a form-fit connection and/or a substance-to-substance bond.

4. A bicycle hub component (1) according to claim 2 or 3, **characterized in that** a gear rim that can be attached to the rotor (10) and/or the spur gearing include(s), at least sectionwise, a metal coating on the surface thereof or a metal insert.

5. A bicycle hub component (1) according to one of the claims 1 to 4, **characterized in that** the metallization (9) is a metallic coating.

6. A bicycle hub component (1) according to one of the preceding claims, **characterized in that** the metallization abuts on a shoulder (3) of the axle (2), said shoulder (3) being defined by a sudden change in outer diameter of the axle (2).

7. A bicycle hub component (1) according to claim 6, **characterized in that** the metallization covers a side of the shoulder (3) that faces the smaller outer diameter region.

8. A bicycle hub component (1) according to one of the claims 1 to 7, **characterized in that** the axle (2) has a constant wall thickness or, along an axis of rotation (6), a constant cross-sectional area orthogonal to said axis of rotation (6).

9. A bicycle comprising a rear and/or front wheel having installed therein a bicycle hub component according to one of the preceding claims.

## Revendications

1. Bloc de moyeu de vélo (1) comprenant un essieu creux (2) constitué de matériau composite renforcé par des fibres, à l'au moins une extrémité (4) duquel un pendant émergent (7) est emboîté et dans lequel au moins un palier à roulement (8) est positionné sur l'essieu (2), **caractérisé en ce qu'**une métallisation (9) séparée du pendant émergent (7) est appliquée entre le palier à roulement (8) et l'essieu (2).

2. Bloc de moyeu de vélo (1) selon la revendication 1, **caractérisé en ce qu'**un rotor (10) est disposé à rotation sur l'essieu (2) et un dispositif d'axe libre (11) pouvant être coulissé axialement est contenu par le biais duquel la force dans seulement un sens de rotation autour de l'essieu (2) peut être transférée du rotor (10) sur un corps de moyeu (12), dans lequel le rotor (10) présente une denture frontale sur son extrémité tournée vers le corps de moyeu (12).

3. Bloc de moyeu de vélo (1) selon la revendication 2, **caractérisé en ce qu'**un élément séparé du rotor (10) présentant la denture frontale est relié à celui-ci par conjugaison de formes et/ou liaison de matière.

4. Bloc de moyeu de vélo (1) selon la revendication 2 ou 3, **caractérisé en ce qu'**une couronne de dents pouvant être enfilée sur le rotor (10) et/ou la denture frontale présente au moins par section un revêtement métallique sur la surface ou présente un insert métallique.

5. Bloc de moyeu de vélo (1) selon l'une quelconque des revendications 1 à 4, **caractérisé en ce que** la métallisation (9) est un revêtement métallique.

6. Bloc de moyeu de vélo (1) selon l'une quelconque des revendications précédentes, **caractérisé en ce que** la métallisation repose sur un épaulement (3) de l'essieu (2), dans lequel l'épaulement (3) est généré par une variation de diamètre externe soudaine de l'essieu (2).

7. Bloc de moyeu de vélo (1) selon la revendication 6, **caractérisé en ce que** la métallisation recouvre un côté de l'épaulement (3) tourné vers la région de diamètre externe plus petite.

8. Bloc de moyeu de vélo (1) selon l'une quelconque des revendications 1 à 7, **caractérisé en ce que** l'essieu (2) présente une épaisseur de paroi constante ou présente le long d'un axe de rotation (6) une surface en section transversale constante orthogonale à celui-ci.

9. Vélo avec une roue arrière et/ou avant, dans laquelle un bloc de moyeu de vélo selon l'une quelconque des revendications précédentes est intégré.
